# EUROPEAN PATENT APPLICATION

(11) **EP 1 933 230 A1**
(43) Date of publication of application: **18.06.2008**
(21) Application number: 06125866.1
(22) Date of filing: 12.12.2006
(51) Int. Cl.: G06F 3/048

(54) **Log component of user interface**

(71) Applicant: NetHawk Oyj, 90570 Oulu (FI)
(72) Inventor: Hannula, Heikki, 90240, Oulu (FI); Ikäheimo, Jorma, 90550, Oulu (FI)
(74) Representative: Pykälä, Timo Tapani

(57) **Abstract**

An apparatus, a computer program, and a method for user interface manipulation are disclosed. The method comprises the following: transferring (2402) chronological data; displaying (2404) the chronological data in a window; displaying (2406) a log component representing the contents of the window; displaying (2408) in the log component bookmarks pointing to predetermined portions of the chronological data; receiving (2410) a selection of a bookmark; and manipulating (2412) the window so that a portion of the chronological data pointed to by the selected bookmark becomes visible in the window.

## Description

### Field

The invention relates to an apparatus, computer program, and method for user interface manipulation.

### Background

The operator of a telecommunications network can utilize the signalling information generated during the establishment, maintenance and termination of a data communication connection for clearing up problem situations of the network or in the general development of the telecommunications network. The way in which the signalling information of the telecommunications network is stored and presented has an effect on the usability of the signalling information in various analyses. If there is a huge amount of signalling information under investigation, exploring between specific events or finding events of a specific type is difficult.

US 5,339,391 discloses a computer display unit with an attribute-enhanced scroll bar. US 6,157,381 discloses a computer system, user interface component and method utilizing a non-linear scroll bar. US 5,506,951 discloses a scroll bar with jump tags.

### Brief description

The present invention seeks to provide an improved apparatus, computer program, and method.

According to an aspect of the invention, there is provided an apparatus as specified in claim 1.

According to another aspect of the invention, there is provided a computer program as specified in claim 17.

According to another aspect of the invention, there is provided a method as specified in claim 18.

According to another aspect of the invention, there is provided an apparatus as specified in claim 34.

### List of drawings

Embodiments of the present invention are described below, by way of example only, with reference to the accompanying drawings, in which
Figures 1, 2 and 3 illustrate embodiments of an apparatus;
Figures 4, 5, 6, 7, 8, 9, 10 and 11 illustrate embodiments of a log component and features related to the log component;
Figures 12, 13 and 14 illustrate the processing of bookmarks;
Figures 15, 16, 17, 18, 19, 20, 21, 22 and 25 illustrate the processing of the log component; and
Figures 23 and 24 illustrate embodiments of a method.

### Description of embodiments

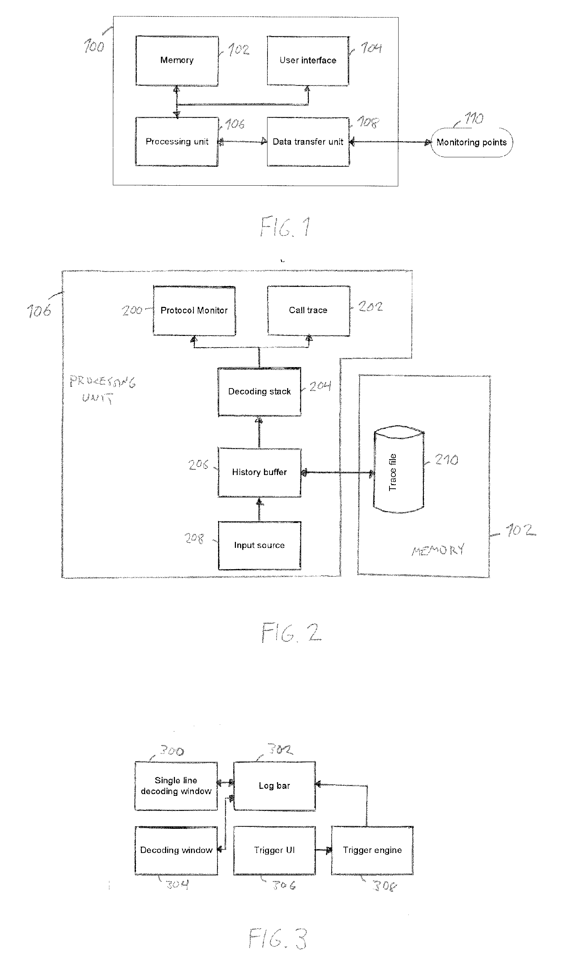

With reference to Figures 1, 2 and 3, let us examine embodiments of an apparatus. The apparatus may be utilized in telecommunication testing and measurement systems for providing a protocol-monitoring aid. The apparatus may also be used in other logging systems where lots of data is monitored to provide help for finding specific events.

The apparatus may be a measuring device, such as an analyser. The apparatus may be for instance a protocol analyser used for measuring the operation of a data transmission system. The apparatus may also be a simulator or an interface card. The apparatus may also be a computer provided with for instance Microsoft Windows® or some other operating system and dedicated protocol analysis software.

The analyser 100 comprises a processing unit 106. The processing unit 106 is a block controlling the operation of the analyser. The processing unit 106 may be implemented as a processor including software, but different hardware implementations are also possible. For instance a circuit constructed of separate logic components or one or more application-specific integrated circuits (ASIC) are possible implementations. A combination of different implementations is also possible.

The analyser 100 may also comprise a data transfer unit 108, which may include a transceiver and an antenna by which the analyser receives and transmits signals. The data transfer unit 108 may be connected to external interfaces of a telecommunications system, so-called monitoring points 110, for capturing messages from the telecommunications system. The captured messages may include both user data and signalling messages. The data transfer unit 106 may further comprise a time stamp unit (not shown in Figure 1) that adds time stamps to the captured data. The time stamp unit may be synchronized to a high accuracy clock, for example to GPS time received with a GPS receiver (Global Positioning System).

The analyser 100 may also comprise a memory block 102 for saving captured data and analysis results.

The analyser 100 may also comprise a user interface 104 that allows controlling the operations of the analyser and monitoring the operations carried out by the analyser. The user interface 104 may comprise a display and a keyboard, for example. Depending on the analyser the user interface 104 may comprise various other user interface parts.

The processing unit 106 may process the captured data. The processing unit 106 may comprise the actual analyser software comprising a protocol monitor 200, a call trace module 202, a decoding module 204, a history buffer 206, input source components 208 and a trace file 210, for example. Captured and time-stamped data is passed from the data transfer unit 108 to the related input source 208. From the input source 208 data is delivered to the history buffer 206 that handles buffering and saving received data to the trace file 210. The history buffer 206 also delivers data to the decoding stack 204 containing requisite decode layers for decoding the data. From the decoding stack 204 the decoded data may be delivered to several applications. The applications may include the protocol monitor application 200 that shows the decoded data in a user-friendly format and the call trace application 202 where call and session follow-up and correlation with calls and sessions in other interfaces is accomplished.

While Figure 1 illustrated the main parts of the analyser 100 and Figure 2 the analyser software, Figure 3 takes another viewpoint illustrating the user interface 104 in more detail. The user interface 104 may be used in connection with the applications, with the protocol monitor application 200 and the call trace application 202, for example.

A single-line decoding window 300 displays decoded messages in a tabular format, one event per each row. Message and information element (IE) names and contents are printed into columns. A decoding window 304 displays decoded messages in a user-friendly format. A trigger user interface 306 is a window where the user can set triggers to different messages and information elements. A trigger engine 308 is a component handling triggered events.

The apparatus thus comprises an interface 208 configured to transfer chronological data and a window module 300/304 configured to display the chronological data in a window.

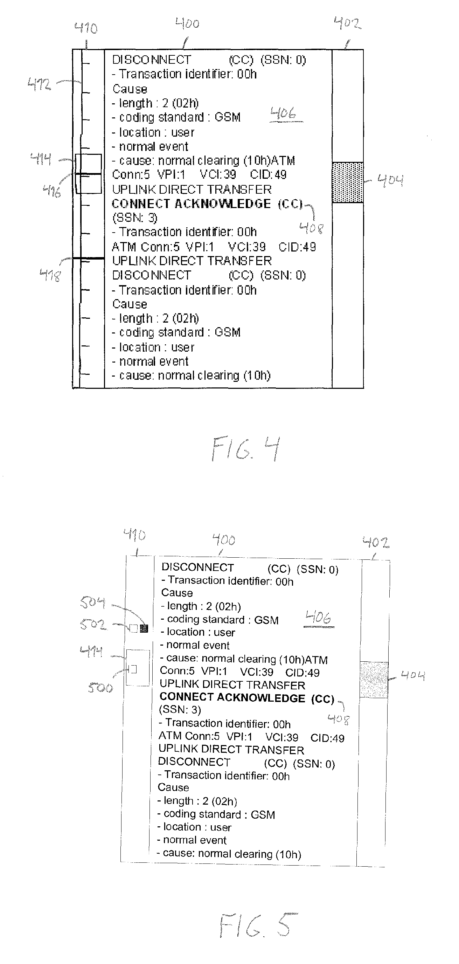

The apparatus further comprises a log module 302 configured to display a log component representing the contents of the window. This is illustrated in Figure 4: the chronological data 406 is displayed in the window 400, and the log component 410 is displayed on the side of the window 400.

The log component 410 may be a log bar, as illustrated in Figure 4. The advantage of using the log bar is that its principle is intuitive while its form resembles that of a scroll bar. Nevertheless, other suitable forms of the log component may also be used as needed. The log bar may be a vertical log bar, as illustrated in Figure 4, but as we shall later see the log bar may also be a horizontal one. Vertical log bar is used to show marked messages/IEs relative to their vertical position (time). The horizontal log bar may be used to show tracked elements relative to a horizontal position, i.e. a position within the selected single-line display row.

There may be one common log component 410 displayed in the single-line decoding window 300, because there are usually more events visible in the single-line decoding window than in the decoding window 304.

The log module 302 is also configured to display in the log component 410 bookmarks 416, 418 pointing to predetermined portions 408 of the chronological data 406. In Figure 4 the bookmark 416 points to (or indicates) the predetermined portion 408 of the chronological data, i.e. to the "CONNECT ACKNOWLEDGE (CC)" line of the illustrated measurement apparatus trace data.

The window 400 may be a scrollable window, as illustrated in Figure 4. Such a scrollable window may include a scroll bar 402 with a car 404. The visible area in the window 400 may be presented using a rectangular box 414 on top of the log component 410.

The user may select the events to be shown in the log component 410 according to event type (all decoding errors, for example), connection/call or by selecting and naming a specific message / information element. The log component 410 may be scaled so that its height is the same as the height of the protocol monitor window client area. If a greater height is desired, the log component 410 may be made scrollable. Normally, all the recent events are shown and they are scaled to fit in the log component 410, and the current event is the same that is active in the protocol monitor application 200.

The window module 300/304 is further configured to receive a selection of a bookmark 416, and manipulate the window 400 so that a portion 408 of the chronological data 406 pointed to (or indicated) by the selected bookmark 416 becomes visible in the window 400. If the window 400 is scrollable, the window module 300/304 may further be configured to scroll the scrollable window 400 so that the portion 408 of the chronological data 406 pointed to by the selected bookmark 416 becomes visible in the window 400.

As illustrated in Figure 4, the log module 302 may further be configured to display a timeline 412 illustrating the chronological order of the chronological data in the log component 410. The timeline 412 may comprise an absolute time value, i.e. the date and the time, or a relative time value, i.e. a number of time units starting from a zero point. The timeline 412 may also illustrate the chronological order in some other way, using a running number, such as an event number.

The log component 410 may also function so that the user may move to a certain time/event number by clicking the log bar 410 at the wanted point.

As illustrated in Figure 5, the log module 302 may further be configured to display each bookmark 500, 502, 504 in a predetermined colour specifying the type of the chronological data pointed to by that bookmark. The shape of the bookmark may also vary as the log module 302 may further be configured to display each bookmark in a predetermined shape specifying the type of the chronological data pointed to by that bookmark. In Figure 4 the bookmarks 416, 418 are lines, whereas in Figure 5 the bookmarks 500, 502, 504 are squares. With this embodiment, the signalling events may be presented as simple graphical symbols describing the signalling events instead of various code denotations that are difficult to remember.

Figure 5 also illustrates that the log component 410 may, besides being one-dimensional, also be two-dimensional. In Figure 5, the timeline 412 runs vertically, but the other dimension is also there: adjacent bookmarks 502 504 may relate to the same moment in time but on different protocol layers (or different calls, connections, bookmark groups, etc.).

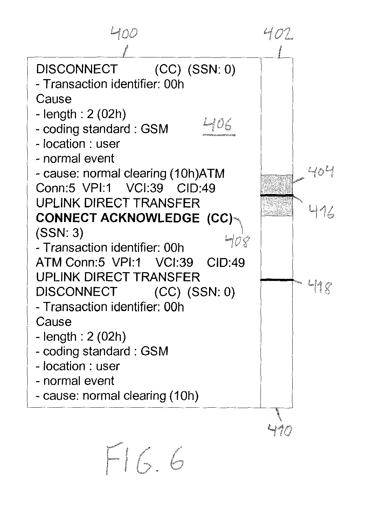

The log bar 410 does not contain a drag feature because that would turn it into a scroll bar 402. The log bar 410 is not scroll bar 402, as clicking the scroll bar 402 scrolls page up/down, whereas clicking the log bar 410 scrolls to a specific time/event. However, as illustrated in Figure 6, the log module 302 may further be configured to display the log bar 410 coupled with the scroll bar 402.

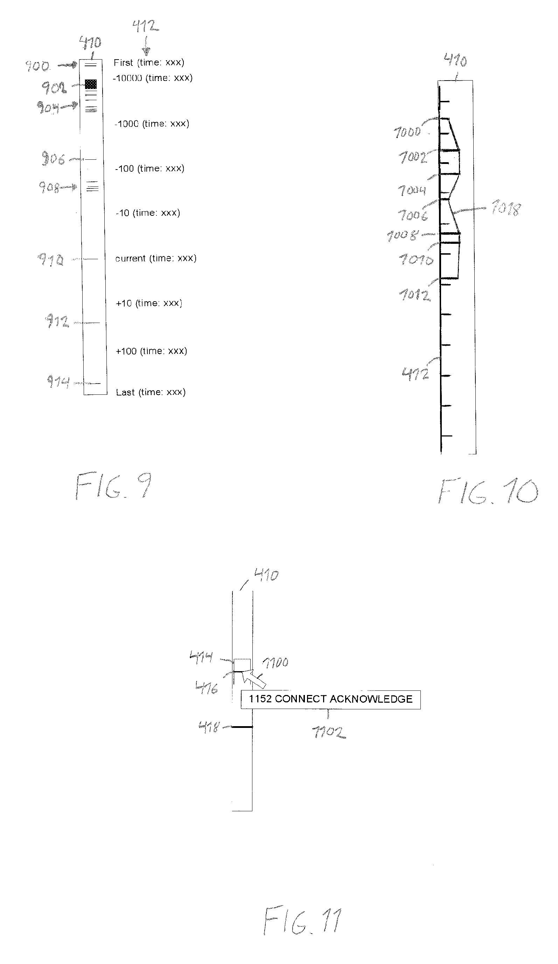

Figure 11 illustrates that holding a hovering cursor 1100 over a bookmark 416 may open a tool tip window 1102 giving more information about the marked message.

Figure 9 illustrates that the log module 302 may further be configured to display the log component 410 in a non-linear chronological order. This embodiment helps the user to handle a large number of events under investigation because the bookmarks 900, 902, 904, 906, 908, 910, 912, 914 of the whole file can be displayed at a time. The non-linearity may be implemented either in relation to event number or to time, for example. Exploring between specific events or finding events of specific type is easy with this kind of log component 410. One way of implementing the non-linear chronological order is to use a logarithmic chronological order. The log component 410 may be displayed so that the presently visible portion of the chronological data in the window 400 and its adjacent portions are shown in more detail in the log component 410, and the more distant portions of the chronological data are shown with less detail in the log component 410. In Figure 9 this is illustrated by the timeline 412 having a logarithmic scale. The user may select the current event by clicking the log component 410 at the wanted point (time), and the events are scaled again to focus on the area near the current event, and the other events are compressed in the log component 410.

In an embodiment, the log module 302 is further configured to display a line connecting bookmarks belonging together according to a predetermined criterion (or criteria). By following this line, the user may easily track a sequence of events, for example. Figure 10 illustrates this in another embodiment, wherein the log module 302 is further configured to display predetermined bookmarks 1000, 1002, 1004, 1006, 1008, 1010, 1012 scaled according to a value in the portion of the chronological data 406 pointed to by that bookmark. In the example of Figure 10, the vertical length of each bookmark 1000, 1002, 1004, 1006, 1008, 1010, 1012 illustrates the changing of the values as a function of time. In Figure 10, the log module 302 is further configured to display a line connecting the predetermined scaled bookmarks and forming a curve 1018 that illustrates the variation of the values in the portion of the chronological data 406 pointed to by the predetermined scaled bookmarks 1000, 1002, 1004, 1006, 1008, 1010, 1012.

The scaled bookmark may be used to indicate a value in a field of a protocol message or a value in a measurement made by an application, for example. Examples of such scaled bookmarks include a signal-to-interference ratio (SIR) in a measurement report message or a throughput measured by a quality of service (QoS) application. The scaled bookmark may be a bar or a dot, which may be connected by a line making a curve. This makes it easy to follow multiple events related to signalling, for example.

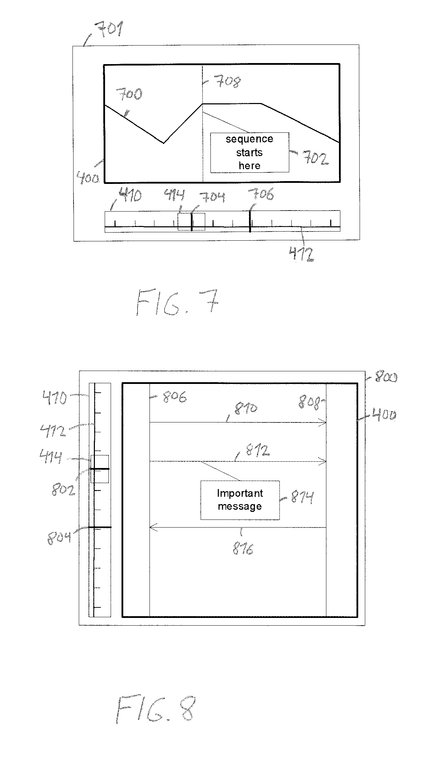

As mentioned earlier, the chronological data may comprise measurement apparatus trace data. Figures 7 and 8 illustrate other types of chronological data.

In Figure 7, a sub-window 400 and a horizontal log component 410 are displayed within a window 701. The chronological data is in the form of a chart 700. The chart 700 contains indicator lines 708 indicating important bookmarks 704, 706. The indicator line 708 may relate to a start of a sequence marked by a function, trigger, or user note, for example. An explanation 702 may be coupled to the indicator line 708.

In Figure 8, a sub-window 400 and a vertical log component 410 are displayed within a window 800. The chronological data is now in the form of messages 810, 812, 816 between two entities 806, 808, i.e. messages in a message sequence chart. The message sequence chart may include notes 814 made by the user or set by a function or a trigger. The log component 410 may display bookmarks 802, 804 pointing to the notes 814.

A prior art protocol analyser contains triggers for triggering user-defined actions when certain messages/IEs are detected. One such action may be filtering a certain message/IE when it is detected. In this case only the messages/IEs filtered are displayed on decoding windows. Users of the protocol analyser may want to follow certain messages, for example connection acknowledge messages. The user may set a filter in a trigger for seeing only the specified messages in the decoding window. This leads to a problem: other messages are not seen in the decoding window, in order to see all messages the trigger may be disabled so that all messages are seen. If the trigger is disabled, the other interesting messages may be placed out of screen so that their position is not known. The log module 302 presents a new kind of user interface for tracking these messages. The log component 410 is displayed and certain messages are indicated therein relative to a current scroll position of the decoding windows 300/304 using bookmarks 416, 418.

The log component 410 helps the user to see the tracked elements and the number and frequency of the tracked elements easily. Even if there is a large number of events under investigation, exploring between specific events or finding events of specific type is easy. The progress of the signalling that has taken place in a subscriber connection may be presented in the correct perspective of time, which makes it easier to analyse the signalling and possible situations of failure. The time axis of the signalling table may be zoomed to the desired level of accuracy, whereby problematic signalling events may be disclosed. The timing of the signalling events may be clearly illustrated, and a period between bookmarks may be measured by selecting two bookmarks in a measurement mode. The signalling events that have taken place in different subscriber connections may be seen in proportion to each other in the log component 410 and the window 400 for analysing the interferences they possibly cause to each other. Also, only specific call/connection bookmarks may be selected for showing on the log component 410, making it easier to track bookmarks relating to a specific call/connection.

The bookmark information may be stored in a recorded trace file 210 so that the bookmarks are usable right after the recorded trace file is opened. There is no need for time consuming re-decoding of the trace file before the user sees the bookmarks and the user may move within the trace file using the stored bookmarks. This saves time in an analysis of a large trace file.

The apparatus may be an appropriately programmed computer. The computer may be an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of the microinstructions may vary, depending on the CPU design. The program instructions may be coded by a programming language, which may be a high-level programming language, such as C, or Java, or a low-level programming language, such as a machine language, or an assembler. The electronic digital computer may also have an operating system, which may provide system services to a computer program written using the program instructions.

The computer may further comprise a number of other devices, such as user interface equipment, memory equipment, and communication equipment.

Interfaces between the various modules may be implemented with suitable interface technologies, such as a message interface, a method interface, a sub-routine call interface, a block interface, or any means enabling communication between functional sub-units.

An embodiment provides a computer program comprising program instructions which, when loaded into the computer, constitute at least some of the modules 200, 202, 204, 206, 208, 300, 302, 304, 306 and 308.

The computer program may be in a source code form, object code form, or in some intermediate form, and it may be stored on a carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single computer or it may be distributed to a number of computers.

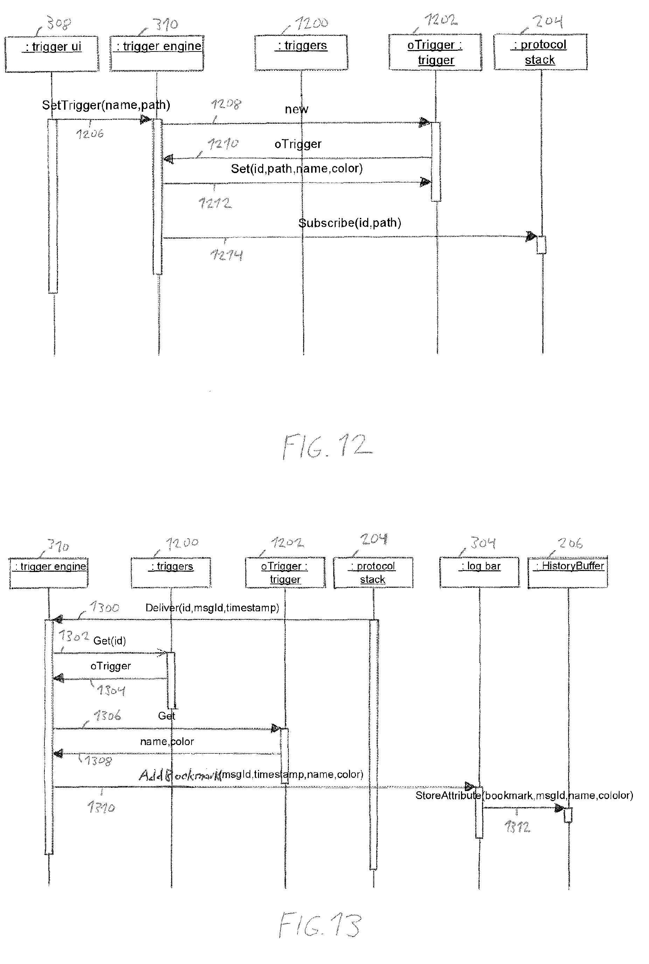

As mentioned earlier, one way of creating the bookmarks is by the user setting bookmarks to message elements in a decoding display. Another way is illustrated in Figure 12, wherein triggers for bookmarks are set. A user selects a message or an IE, sets a suitable colour for the bookmark, and gives a name for the trigger with the trigger user interface 308. The trigger user interface 308 calls 1206 a SetTrigger method of the trigger engine 310. The trigger engine 310 creates 1208, 1210 a new trigger object of a trigger class 1202. Next, the trigger engine 310 also allocates a new id for the subscription, and sets 1212 the trigger id, subscription path, trigger name and bookmark colour to the trigger object 1202. Finally, the trigger engine 310 subscribes 1214 an indication of the message/IE from the protocol stack 204.

Figure 13 illustrates the triggering of the bookmarks. The protocol stack 204 decodes a subscribed message/IE, and delivers 1300 an indication about it to the subscriber, i.e. to the trigger engine 310. The trigger engine 310 searches 1302 for the correct trigger object from the list 1200 of trigger objects using the id included in the indication. The indication also includes a message identification number and a time stamp. After obtaining 1302, 1304 the correct trigger object, the trigger engine 310 gets 1306, 1308 the name and colour from the trigger object 1202. Next, the trigger engine 310 calls 1310 an Add-Bookmark method of the log module 304 to add a bookmark; name and colour attributes of the trigger object are included in the call as parameters as well as the message id and the time stamp. The log module 304 draws the bookmark and stores 1312 all parameters of the bookmark as history buffer 206 attributes. While scrolling the trace file back and forth or opening the trace file, the bookmarks are found from the history buffer 1312. The usage of the history buffer 206 and attributes is further described in the applicant's Finnish patent application number 20055224, incorporated herein by reference.

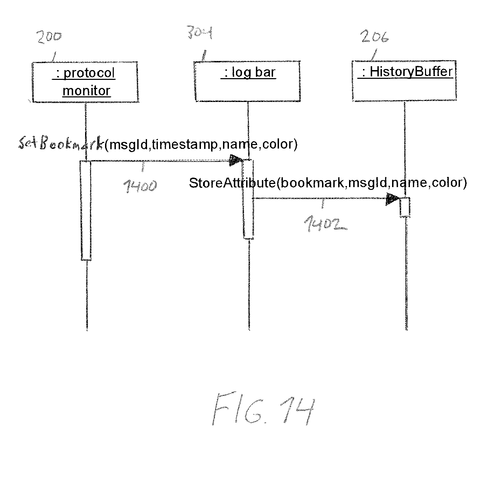

Figure 14 illustrates setting a bookmark to a certain message/IE. A message/IE is selected from the protocol monitor 200, and a set bookmark function is started. The protocol monitor 200 calls 1400 a SetBookmark method of the log module 304 to set a bookmark, giving the message id, time stamp, colour and name as parameters. The log module draws the bookmark and stores 1402 all parameters of the bookmark as the history buffer 206 attributes. The bookmark may be set from a decoding window of the protocol monitor 200 or for example from the call trace application 202 to mark a certain state of a call.

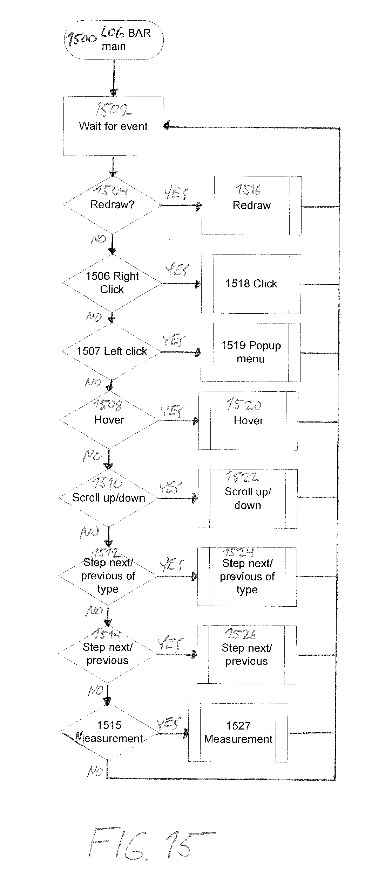

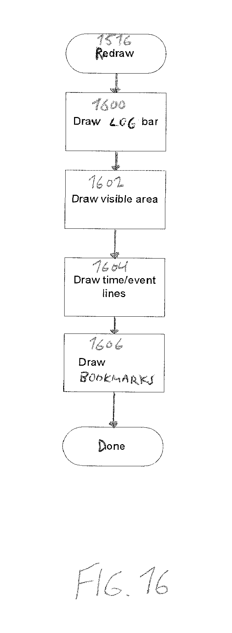

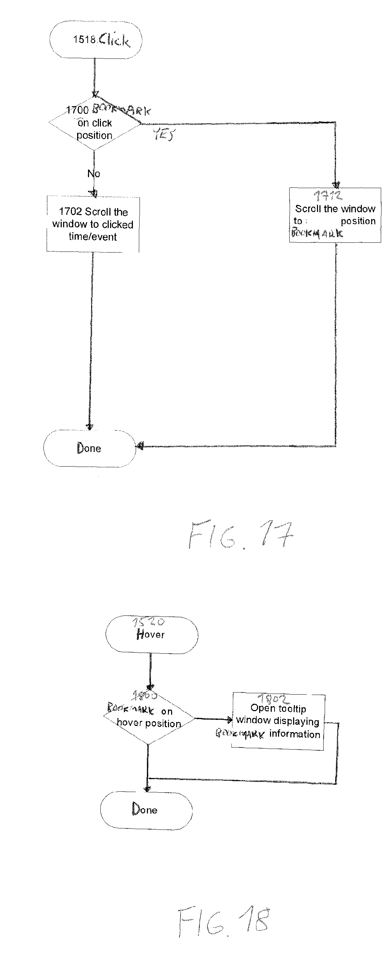

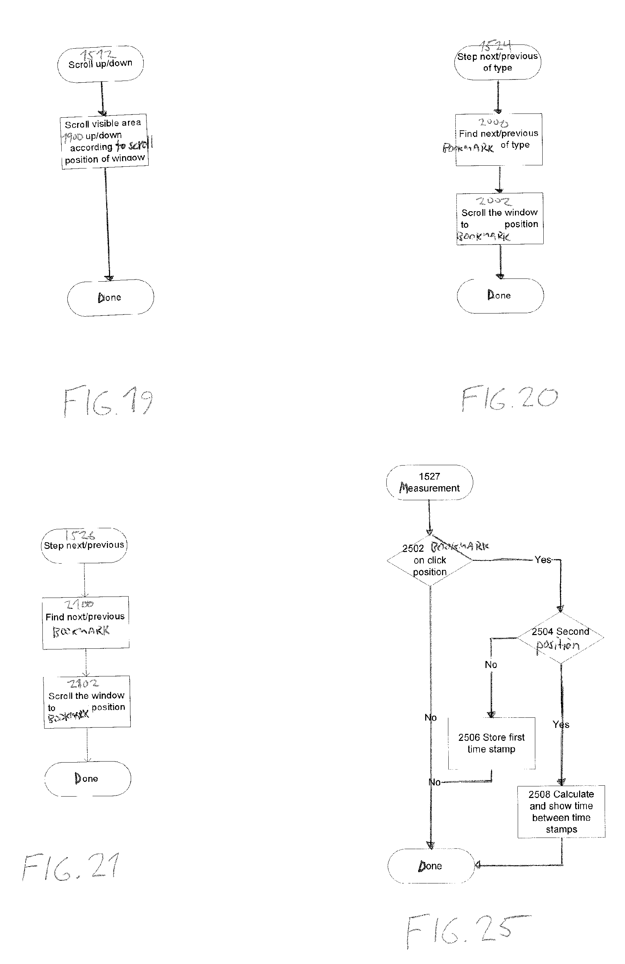

A user interface logic of the log component 410 is presented in Figures 15, 16, 17, 18, 19, 20, 21 and 25.

In Figure 15, the main process 1500 of the log component 410 may run in the background and wait 1502 for user interface events sent by a windowing system, for example Microsoft Windows®. After an event has been received, a number of tests 1504, 1506, 1507, 1508, 1510, 1512, 1514, 1515 may be performed.

If the log component 410 needs to be redrawn, a redraw event is received and a redraw routine 1516 is performed. First, the log bar window is drawn 1600; the contents of the window may be filled for example using a grey colour. Next, a rectangle 414 representing the visible area is drawn 1602; the rectangle may be filled with another colour in order to visually distinguish it from the non-visible area. Next, a timeline 412 may be drawn 1604. The timeline may be divided into suitable segments decided for example automatically by the total length of the session. The segments may each represent for instance ten-minute periods or one thousand events. Next, the bookmarks 416, 418 are drawn 1606. Bookmark attributes (positions, colours, etc.) may be kept in a memory of the log component 410 in order to enable quick redrawing of the bookmark. If the trace file 210 is loaded, the bookmarks may be searched from the trace file 210 using the history buffer 206 attribute-handling interface.

If the user performs a right mouse click 1506, a routine 1518 is performed. The click position of a right click is determined 1700 and bookmark data is read to find out the existence of a bookmark in the current cursor position. If there is no bookmark in the current click position, the decoding windows 300, 304 are scrolled 1702 so that the clicked time/event becomes visible. If there is a bookmark in the current click position, the decoding windows 300, 304 are scrolled 1712 to a position read from the bookmark data.

If the user holds the hovering cursor steadily at one position of the log component 410 for a predetermined duration, the cursor position is read and the bookmark data is checked 1800 for the existence of a bookmark at the cursor position in a routine 1520. If there is a bookmark at the cursor position, a tool-tip window 1102 is opened 1802, and bookmark data including for instance an event number, time stamp and name is displayed in the tool-tip window 1102.

If the decoding windows 300, 304 are scrolled up or down, the visible area of the log component 410 is also scrolled 1900 up or down according to the scroll position in the routine 1522.

If the user performs a left click 1507 on the log component 410, a routine 1519 is performed. In the routine 1519 a pop-up window is opened. The pop-up window includes menu items for setting a first measurement position (used in 2506), for setting a second measurement position (used in 2508), for stepping 1514 to a next/previous bookmark, for stepping 1512 to a next/previous bookmark of the same type, and for measuring time between two bookmarks 1527. After selecting the operation, a new event is generated according to the selection and handled by the user interface logic.

If the user performs a left click on the log component 410, and selects the menu item "step to a next bookmark of the same type", the next bookmark that has the same name is searched 2000 from the bookmark data, and the log component 410 and the decoding windows 300, 304 are scrolled 2002 to the bookmark position in a routine 1524. Correspondingly, if the user performs a left click on the log component 410, and selects the menu item "step to a previous bookmark of the same type", the previous bookmark that has the same name is searched 2000 from the bookmark data, and the log component 410 and the decoding windows 300, 304 are scrolled 2002 to the bookmark position.

If the user performs a left click on the log component 410, and selects the menu item "step to a next bookmark", the next bookmark is searched 2100 from the bookmark data, and the log component and the decoding windows 300, 304 are scrolled 2102 to the bookmark position in a routine 1526. Correspondingly, If the user performs a left click on the log component 410, and selects the menu item "step to a previous bookmark", the previous bookmark is searched 2100 from the bookmark data, and the log component 310 and the decoding windows 300, 304 are scrolled 2102 to the bookmark position.

If the user performs a left click on the log component 410, and selects the menu item "set first measurement position", the test 1515 results in "yes" and a routine 1527 is performed. The existence of a bookmark in the click position is checked 2502. If there is a bookmark in the click position, it is the first position, and the test 2504 results in "no", and the time stamp of the current bookmark is stored 2506.

If the user performs a left click on the log component 410, and selects the menu item "set second measurement position", the existence of a bookmark in the click position is checked 2502. If there is a bookmark in the click position, it is the second position, and the test 2504 results in "yes", and the difference between the stored first time stamp and the time stamp of the current bookmark is calculated 2508 and displayed to the user in a pop-up window.

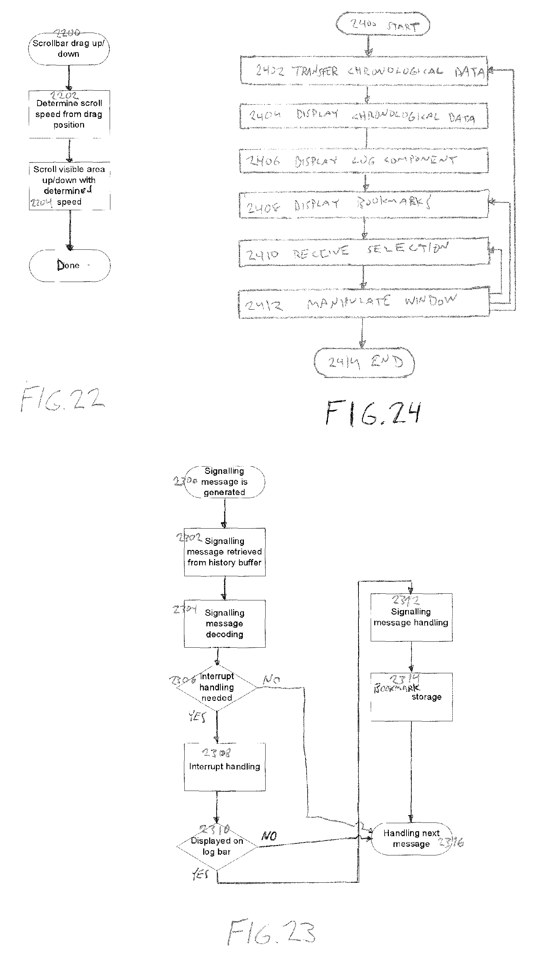

Figure 22 illustrates how the manipulation 2200 of the scroll bar 402 affects the log component 410. If the car 404 of the scroll bar 402 is dragged up or down and the non-linear mode is used, the scrolling speed is determined 2202 according to the distance of the current drag position of the car 404 from the starting position of the car 404. The visible area of the decoding window 300, 304 is then scrolled 2204 up or down using the determined speed and the visible area of the log component 410 is also scrolled up or down according to the scroll position of the decoding window 300, 304.

Next, a method will be described with reference to Figure 24. The method is started in 2400. Chronological data is transferred 2402 and it is displayed 2404 in a window. A log component representing the contents of the window is displayed 2406, and furthermore, in the log component bookmarks pointing to predetermined portions of the chronological data are displayed 2408. A selection of a bookmark is received 2410, and the window is manipulated 2412 so that a portion of the chronological data pointed to by the selected bookmark becomes visible in the window. The method runs until it is ended 2414, generally by a user action. The embodiments described earlier in connection with the apparatus may be utilized to enhance the method as well. It should be noted that no special order of operations is required in the method, except where necessary. For example: the transfer of data in 2402 may be performed either before or after the other operations, because the chronological data may be obtained and/or sent by the apparatus.

Figure 23 is an exemplary flow chart of a method utilized in a protocol analyser. In 2300, a signalling message is generated in an interface of a telecommunications network being examined; the signalling message is captured and saved in the history buffer of the protocol analyser. The signalling message may comprise parameters describing the signalling event and a time stamp. For the processing of the signalling message, the decoding controller of the protocol analyser retrieves the signalling message from the buffer of the protocol analyser in 2302. The decoding controller sends the signalling message for decoding to the signalling decoder in a protocol stack of the protocol analyser in 2304. The signalling decoder makes the decision on whether interrupt processing is needed or not in 2306. If no interrupt processing is needed, the process moves to the handling 2316 of the next message captured in the buffer.

If the signalling message is such that interrupt processing is needed, it is performed in 2308. In the second part 2310 of the interrupt processing, an application (for instance a protocol monitor application) detects whether the message is a signalling message to be utilized in the log component or not. If the signalling message is such that it will not be shown in the log component, the process moves to 2316, wherein the processing of the next message captured in the buffer is started.

If it is found in 2310 that the signalling message is used in the log component, the triggering engine handles the message and sets a bookmark to the log component in 2312.

In 2314, the information about the bookmark is stored in internal data of the log component and the same information is also stored as an attribute of the signalling message in the history buffer.

Even though the invention has been described above with reference to an example according to the accompanying drawings, it is clear that the invention is not restricted thereto but can be modified in several ways within the scope of the appended claims.

## Claims

1. An apparatus, comprising:
an interface configured to transfer chronological data;
a window module configured to display the chronological data in a window; and
a log module configured to display a log component representing the contents of the window, and in the log component bookmarks pointing to predetermined portions of the chronological data; and
the window module is further configured to receive a selection of a bookmark and manipulate the window so that a portion of the chronological data pointed to by the selected bookmark becomes visible in the window.

2. The apparatus of claim 1, wherein the log module is further configured to display a timeline illustrating the chronological order of the chronological data in the log component.

3. The apparatus of any preceding claim, wherein the log module is further configured to display the log component in a non-linear chronological order.

4. The apparatus of any preceding claim, wherein the log module is further configured to display the log component in a logarithmic chronological order.

5. The apparatus of any preceding claim, wherein the log module is further configured to display the log component so that the presently visible portion of the chronological data in the window and its adjacent portions are shown in more detail in the log component, and the more distant portions of the chronological data are shown with less detail in the log component.

6. The apparatus of any preceding claim, wherein the log module is further configured to display each bookmark in a predetermined colour specifying the type of the chronological data pointed to by that bookmark.

7. The apparatus of any preceding claim, wherein the log module is further configured to display each bookmark in a predetermined shape specifying the type of the chronological data pointed to by that bookmark.

8. The apparatus of any preceding claim, wherein the log module is further configured to display predetermined bookmarks scaled according to a value in the portion of the chronological data pointed to by that bookmark.

9. The apparatus of claim 8, wherein the log module is further configured to display a line connecting the predetermined scaled bookmarks, the line forming a curve illustrating the variation of the values in the portion of the chronological data pointed to by the predetermined scaled bookmarks.

10. The apparatus of any preceding claim, wherein the log module is further configured to display a line connecting bookmarks that belong together according to a predetermined criteria.

11. The apparatus of any preceding claim, wherein the log component comprises a log bar.

12. The apparatus of claim 11, wherein the log bar comprises a vertical log bar.

13. The apparatus of claim 11, wherein the log bar comprises a horizontal log bar.

14. The apparatus of claim 11, wherein the log module is further configured to display the log bar coupled with a scroll bar.

15. The apparatus of any preceding claim, wherein the window comprises a scrollable window, and the window module is further configured to scroll the scrollable window so that the portion of the chronological data pointed to by the selected bookmark becomes visible in the window.

16. The apparatus of any preceding claim, wherein the chronological data comprises measurement apparatus trace data.

17. A computer program comprising program instructions which, when loaded into a computer, constitute the modules of any preceding claim.

18. A method, comprising:
transferring chronological data;
displaying the chronological data in a window;
displaying a log component representing the contents of the window;
displaying in the log component bookmarks pointing to predetermined portions of the chronological data;
receiving a selection of a bookmark; and
manipulating the window so that a portion of the chronological data pointed to by the selected bookmark becomes visible in the window.

19. The method of claim 18, further comprising: displaying a timeline illustrating the chronological order of the chronological data in the log component.

20. The method of any preceding claim 18 to 19, further comprising:
displaying the log component in a non-linear chronological order.

21. The method of any preceding claim 18 to 20, further comprising:
displaying the log component in a logarithmic chronological order.

22. The method of any preceding claim 18 to 21, further comprising:
displaying the log component so that the presently visible portion of the chronological data in the window and its adjacent portions are shown in more detail in the log component, and the more distant portions of the chronological data are shown with less detail in the log component.

23. The method of any preceding claim 18 to 22, further comprising:
displaying each bookmark in a predetermined colour specifying the type of the chronological data pointed to by that bookmark.

24. The method of any preceding claim 18 to 23, further comprising:
displaying each bookmark in a predetermined shape specifying the type of the chronological data pointed to by that bookmark.

25. The method of any preceding claim 18 to 24, further comprising:
displaying predetermined bookmarks scaled according to a value in the portion of the chronological data pointed to by that bookmark.

26. The method of claim 25, further comprising: displaying a line connecting the predetermined scaled bookmarks, the line forming a curve illustrating the variation of the values in the portion of the chronological data pointed to by the predetermined scaled bookmarks.

27. The method of any preceding claim 18 to 26, further comprising:
displaying a line connecting bookmarks that belong together according to a predetermined criteria.

28. The method of any preceding claim 18 to 27, wherein the log component comprises a log bar.

29. The method of claim 28, wherein the log bar comprises a vertical log bar.

30. The method of claim 28, wherein the log bar comprises a horizontal log bar.

31. The method of claim 28, further comprising: displaying the log bar coupled with a scroll bar.

32. The method of any preceding claim 18 to 31, wherein the window comprises a scrollable window, and the method further comprises: scrolling the scrollable window so that the portion of the chronological data pointed to by the selected bookmark becomes visible in the window.

33. The method of any preceding claim 18 to 32, wherein the chronological data comprises measurement apparatus trace data.

34. An apparatus, comprising:
means for transferring chronological data;
means for displaying the chronological data in a window;
means for displaying a log component representing the contents of the window;
means for displaying in the log component bookmarks pointing to predetermined portions of the chronological data;
means for receiving a selection of a bookmark; and
means for manipulating the window so that a portion of the chronological data pointed to by the selected bookmark becomes visible in the window.
